# EUROPÄISCHE PATENTSCHRIFT

(11) **EP 2 276 162 B1**
(45) Veröffentlichungstag und Bekanntmachung des Hinweises auf die Patenterteilung: **03.10.2012**
(21) Anmeldenummer: 09165817.9
(22) Anmeldetag: 17.07.2009
(51) Int. Cl.: H02P 21/00, H02P 21/06, H02P 25/02, H02M 7/538, H02P 6/10, H02M 5/458

(54) **Verfahren und Steuersystem zum Ansteuern eines bürstenlosen Elektromotors**
Method and control system for controlling a brushless electric motor
Procédé et système de commande destinés au fonctionnement d'un moteur électrique sans balais

(43) Veröffentlichungstag der Anmeldung: 19.01.2011
(73) Patentinhaber: ebm-papst Mulfingen GmbH & Co. KG, 74673 Mulfingen (DE)
(72) Erfinder: Wystup, Ralph, 74653, Künzelsau (DE); Lipp, Helmut, 74677, Dörzbach-Hohebach (DE)
(74) Vertreter: Patentanwälte Dr. Solf & Zapf

(56) Entgegenhaltungen:
- EP-A- 2 034 605
- JP-A- 10 136 634
- JP-A- 10 248 300
- JP-A- 2002 051 589

## Beschreibung

Die vorliegende Erfindung betrifft zunächst gemäß dem Oberbegriff des Anspruchs 1 ein Verfahren zum Ansteuern eines permanentmagneterregten, bürstenlosen, elektronisch kommutierten, insbesondere dreisträngigen Synchronmotors, wobei eine eine Netzfrequenz aufweisende, einphasige Netzwechselspannung gleichgerichtet und über einen schlanken, keine oder nur eine minimale Zwischenkreis-Reaktanz enthaltenden Zwischenkreis als mit doppelter Netzfrequenz pulsierende Zwischenkreisspannung einem Wechselrichter zugeführt wird, der zur Speisung und Kommutierung des Elektromotors angesteuert wird, wobei die Ansteuerung durch eine feldorientierte Strom-Raumzeiger-Regelung (Vektorregelung) im rotorfesten Kartesischen Koordinatensystem erfolgt, wobei ein q-Strom als drehmomentbildende Komponente des Strom-Raumzeigers senkrecht zum Permanentmagnetfeld geregelt wird und ein d-Strom als feldbeeinflussende Komponente des Strom-Raumzeigers in Richtung des Permanentmagnetfeldes regelbar ist.

Ferner betrifft die Erfindung gemäß dem Oberbegriff des Anspruchs 7 auch ein entsprechendes Steuersystem, insbesondere unter Anwendung des erfindungsgemäßen Verfahrens, mit einem Netzgleichrichter, einem nachgeschalteten schlanken Zwischenkreis ohne oder mit nur minimaler Zwischenkreis-Reaktanz sowie mit einem über den Zwischenkreis gespeisten und zur Kommutierung des Elektromotors ansteuerbaren Wechselrichter mit Mitteln zur feldorientierten Strom-Raumzeiger-Regelung mit einem Drehzahlregler zur Vorgabe eines q-Stroms als drehmomentbildende Komponente des Strom-Raumzeigers.

Elektronisch kommutierte Motoren, so genannte EC-Motoren, werden häufig als Lüfterantriebe eingesetzt. Diese Antriebe bestehen im Allgemeinen aus einem permanentmagneterregten Synchronmotor (PMSM) mit integrierter Leistungs- und Signalelektronik. Hierbei handelt es sich häufig um Außenläufermotoren.

Solche Elektromotoren können an einer einphasigen oder dreiphasigen Netzwechselspannung betrieben werden, indem die Netzwechselspannung zunächst zu einer Zwischenkreisspannung gleichgerichtet wird, die dann über einen gesteuerten Wechselrichter in eine Motor-Betriebsspannung zur Versorgung und Kommutierung des Motors umgesetzt wird. Die Ansteuerung des Wechselrichters erfolgt in aller Regel durch eine feldorientierte Strom-Raumzeiger-Regelung, wobei ein q-Strom als drehmomentbildende Komponente des Strom-Raumzeigers senkrecht zum Permanentmagnetfeld geregelt wird, um ein maximales Drehmoment zu erreichen. Ein d-Strom ist in Richtung des Permanentmagnetfeldes regelbar und bildet eine feldbeeinflussende, d. h. je nach Stromrichtung feldbildende oder feldschwächende Komponente des Strom-Raumzeigers. Bei Synchronmotoren wird der d-Strom üblicherweise auf Null geregelt, um einen optimalen Wirkungsgrad zu erreichen.

Um ein möglichst gleichförmiges, konstantes Motor-Drehmoment mit minimaler Welligkeit (Welligkeit des Luftspaltdrehmomentes, d. h. des inneren Motormomentes) und dadurch ein günstiges Geräuschverhalten (insbesondere bei Lüfter-Antrieben) zu erreichen, sollte die Zwischenkreisspannung eine möglichst konstante Gleichspannung sein. Dazu wurde bisher die über einen Netzgleichrichter gleichgerichtete und stark pulsierende Gleichspannung über mindestens einen Glättungskondensator und gegebenenfalls eine zusätzliche Siebdrossel geglättet. Der Glättungskondensator muss dazu eigentlich eine relativ große Kapazität (z. B. mehrere Hundert pF) aufweisen, so dass üblicherweise Elektrolytkondensatoren (Elkos) eingesetzt wurden. Diese haben aber im praktischen Einsatz einige Nachteile, und zwar insbesondere ein großes Bauvolumen und eine geringe Lebensdauer.

Deshalb besteht heute zunehmend die Tendenz, entweder gänzlich auf Glättungskondensatoren oder zumindest auf Elektrolytkondensatoren zu verzichten, wobei im zweiten Fall längerlebige Folienkondensatoren mit geringerer Kapazität (nur bis zu einigen µF) eingesetzt werden. Aufgrund der fehlenden oder nur geringen (minimalen) Zwischenkreis-Reaktanzen wird von einem "schlanken Zwischenkreis" gesprochen, wobei auf eine Entkoppelung von Netz- und Motorseite durch Speicherbauteile, wie Kondensatoren und Drosseln (Reaktanzen), ganz oder zumindest weitgehend verzichtet wird. Dies bedeutet, dass ein schlanker Zwischenkreis keine oder nur eine minimale Zwischenkreis-Reaktanz enthält.

Mit dieser Technologie des "schlanken Zwischenkreises" treten vor allem bei Versorgung aus dem einphasigen Netz (übliche Netzfrequenz z. B. 50 Hz) besondere Probleme auf, weil die gleichgerichtete Gleichspannung sehr stark mit doppelter Netzfrequenz (z. B. 100 Hz) pulsiert, wobei der Spannungsverlauf dem Betrag der sinusförmigen Netzwechselspannung entspricht. Würde nun ein EC-Motor (PMSM) direkt mit einer solchen stark pulsierenden Gleichspannung versorgt, so könnte unterhalb einer bestimmten Grenzspannung nur noch ein zu kleiner Motorstrom in den Motorwicklungen eingeprägt werden, welcher das geforderte Drehmoment nicht mehr konstant halten kann.

Die Reduzierung von Zwischenkreiskondensator und Drehmomontwelligkeit ist Gegenstand verschiedener Dokumente, ZB. EP2039605, JP 2002051589, JP10248300. Der vorliegenden Erfindung liegt die Aufgabe zu Grunde, auf eine technisch günstige Weise und mit einfachen und kostengünstig realisierbaren Mitteln den Betrieb eines elektronisch kommutierten Elektromotors (EC-Motors) mit "schlankem Zwischenkreis" zu optimieren.

Erfindungsgemäß wird dies durch ein Verfahren gemäß Anspruch 1 erreicht. Ein zur Anwendung des Verfahrens geeignetes Steuersystem ist Gegenstand des Anspruchs 7. Vorteilhafte Ausgestaltungen der Erfindung sind in den abhängigen Ansprüchen sowie in der nachfolgenden Beschreibung enthalten.

Erfindungsgemäß erfolgt demnach eine dynamische Feldschwächung, wobei der d-Strom im negativen Bereich mit einem sinusförmigen Verlauf und doppelter Netzfrequenz vorgegeben wird, und wobei der d-Strom nach seiner Phasenlage (relativ zur Netzfrequenz) und seiner Amplitude derart in Abhängigkeit vom q-Strom geregelt wird, dass eine Welligkeit des q-Stroms minimiert wird. Da der q-Strom als drehmomenbildende Komponente proportional zum Drehmoment ist, wird somit auch die Drehmoment-Welligkeit (Welligkeit des Luftspaltdrehmomentes = inneren Motormomentes) minimiert.

Der Erfindung liegt die Erkenntnis zu Grunde, dass idealerweise der d-Strom derart dynamisch geregelt werden sollte, dass der Stromraumzeiger im rotorfesten Koordinatensystem immer so nachgeführt wird, dass die Länge des Spannungsraumzeigers (was den Amplituden der Strangspannungen entspricht) im rotorfesten Koordinatensystem immer so lang ist, wie dies zum momentanen Zeitpunkt aus der pulsierenden Zwischenkreisspannung möglich ist (Nachführung der Strangspannung). Der Drehmoment bildende q-Stromanteil bleibt dabei konstant. Dazu wäre allerdings eine genaue Lösung einer Differentialgleichung und eine entsprechende technische Umsetzung erforderlich. Durch die vorliegende Erfindung wird aber erreicht, dass durch den zeitlich veränderlichen d-Strom eine Nachführung der Strangspannung anhand des zeitlichen Verlaufs der Zwischenkreisspannung erfolgt, so dass die resultierenden Motor-Strangspannungen mit hinreichend guter Näherung noch aus der pulsierenden Zwischenkreisspannung erzeugt werden können. Ein negativer d-Strom bewirkt eine Feldschwächung, welche dazu führt, dass der Motor bei einer geringeren Klemmenspannung und damit einer geringeren Zwischenkreisspannung betrieben werden kann und dennoch - bei einer dann höheren Stromaufnahme - seine Nennleistung (Nenndrehmoment, Nenndrehzahl) erbringt. Somit wird trotz der pulsierenden Zwischenkreisspannung und auch bei kleinen, unterhalb der bestimmten Grenzspannung liegenden Spannungswerten durch die Feldschwächung der Motor mit nahezu konstantem Drehmoment am Laufen gehalten. Zusätzlich erfolgt durch die dynamische Feldschwächung eine dynamische Energiespeicherung in den vorhandenen Motor-Induktivitäten und dadurch eine Energie-Rückspeisung in den Zwischenkreis sowie eine Strangstromglättung. Es handelt sich praktisch um einen "Hochsetzsteller-Effekt", wodurch die Zwischenkreisspannung noch zusätzlich angehoben und die Drehmoment-Welligkeit weiter reduziert wird.

Ergänzend sei noch bemerkt, dass aus der momentanen Zwischenkreisspannung immer ein Spannungsraumzeiger mit maximal der halben Länge der Zwischenkreisspannung erzeugt werden kann. Die Amplituden der drei Strangspannungen im statorfesten Koordinatensystem entsprechen dabei der Länge des Spannungsraumzeigers im rotorfesten Koordinatensystem. Die Strangspannungen werden anhand des Spannungsraumzeigers durch eine Transformation mit Hilfe der Pulsweitenmodulation (PWM) aus der Zwischenkreisspannung gebildet. Dabei entspricht die maximal mögliche Amplitude der Strangspannungen der halben Zwischenkreisspannung.

Eine hohe Motorinduktivität begünstigt die Spannungsrückspeisung durch die d-Strom-Modulation. Ebenso trägt sie zur Glättung der Motorströme bei und damit zur Konstanthaltung des Drehmomentes. Dies ist wie folgt begründet: Die dynamische Feldschwächung erlaubt es, den Motor bis zu einer minimalen Strang- und damit Zwischenkreisspannung ohne Einbruch des Drehmomentes zu betreiben. Die Rückspeisung von Energie durch die d-Strom-Modulation hebt die Zwischenkreisspannung zwar an (Hochsetzstellereffekt), doch nicht immer bis zu der durch die Feldschwächung erreichbaren Minimalspannung. Die verbleibende Spannungsdifferenz führt dazu, dass der Strangstrom kurzfristig zusammenbricht (pulsiert), was zu Schwankungen des Drehmomentes führt. Eine große Motorinduktivität, welche infolge der hohen Spannungsabsenkbarkeit durch die dynamische Feldschwächung sowieso vorhanden sein muss, glättet den pulsierenden Stromverlauf, wie jede Induktivität einen Stromverlauf glättet (Energiespeicherung), und sorgt dafür, dass der Stromfluss nahezu konstant gehalten werden kann. Aus dem Ansatz für die Differentialgleichung, welche zur exakten Lösung für den d-Stromverlauf in Abhängigkeit der Zwischenkreisspannung führt, folgt: Durch die dynamische Feldschwächung kann die Strangspannung und damit, wie beschrieben, auch die Zwischenkreisspannung weiter abgesenkt werden als dies (bei gleichem i_{d}-Strom-Spitzenwert) durch eine konstante Feldschwächung möglich wäre, da die differentiellen Spannungsabfälle infolge der Änderungsgeschwindigkeit des d-Stroms mit in die Strangspannung einfließen.

Bei der Ansteuerung des Wechselrichters wird der drehmomentbildende q-Strom unabhängig vom d-Strom von einem Drehzahlregler vorgegeben. Dies bedeutet, dass die dynamische Feldschwächung mit Änderung des d-Stroms - abgesehen von der Reduzierung der Welligkeit - keinen Einfluss auf den q-Strom und die jeweils eingestellte Drehzahl des Motors hat. Durch die Variation des d-Stroms ändert sich jeweils nur die Länge und der Winkel des aus den zueinander senkrechten Komponenten resultierenden Strom-Raumzeigers.

Ein erfindungsgemäßes Steuersystem besteht zunächst aus den für eine EC-Steuerung üblichen Bestandteilen, und zwar einem Netzgleichrichter und einem über einen Zwischenkreis nachgeschalteten Wechselrichter, der zur Erzeugung von quasisinusförmig verlaufenden Motorströmen zur entsprechenden Spannungstaktung (Modulation) von einer PWM-Steuerung angesteuert wird. Dazu sind Mittel zur feldorientierten Strom-Raumzeiger-Regelung mit einem Drehzahlregler zur Vorgabe eines q-Stroms als drehmomentbildende Komponente des Strom-Raumzeigers vorgesehen. Erfindungsgemäß weist das Steuersystem einen Funktionsgenerator zur Vorgabe eines sich dynamisch ändernden d-Stroms mit einem sinusförmigen Verlauf und einer zweifachen Netzfrequenz als Stromkomponente zur dynamischen Feldschwächung auf sowie weiterhin einen zweidimensionalen Extremwertregler, der den sinusförmigen d-Strom nach Phasenlage und Amplitude derart in Abhängigkeit von dem q-Strom regelt, dass eine Welligkeit des q-Stroms minimiert wird. Die zusätzlichen Bestandteile des Steuersystems, und zwar der Funktionsgenerator und der Extremwertregler, sind technisch relativ einfach und kostengünstig realisierbar.

Anhand der Zeichnungen soll die Erfindung im Folgenden beispielhaft genauer erläutert werden. Dabei zeigen:
- Fig. 1: ein vereinfachtes Blockschaltbild eines erfindungsgemäßen Steuersystems als bevorzugtes Ausführungsbeispiel,
- Fig. 2: ein Spannungsdiagramm zur weiteren Erläuterung und
- Fig. 3: ein Strom-Raumzeiger-Diagramm im rotorfesten kartesischen Koordinatensystem.

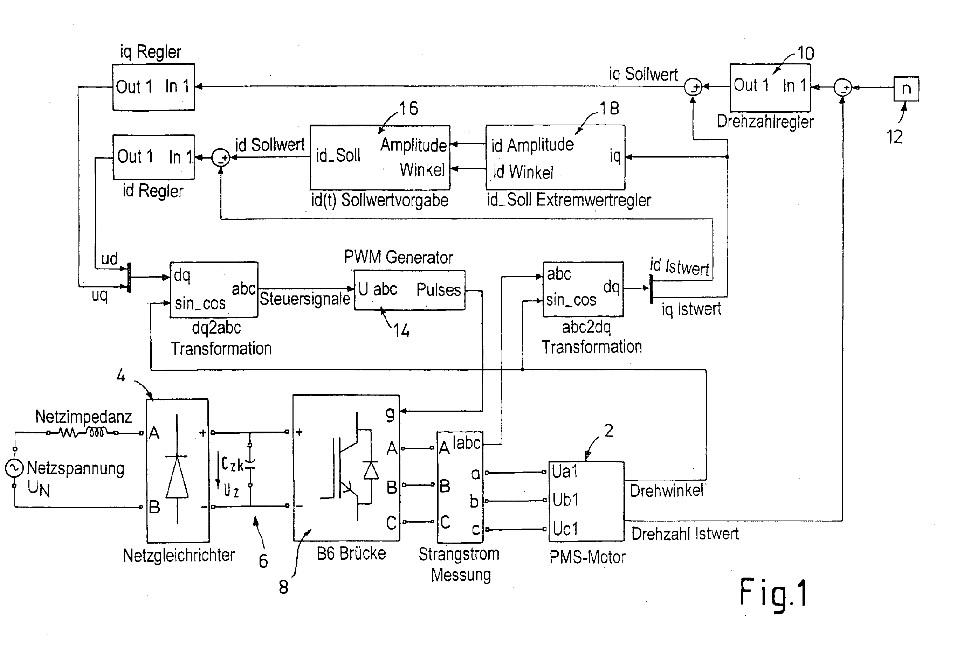

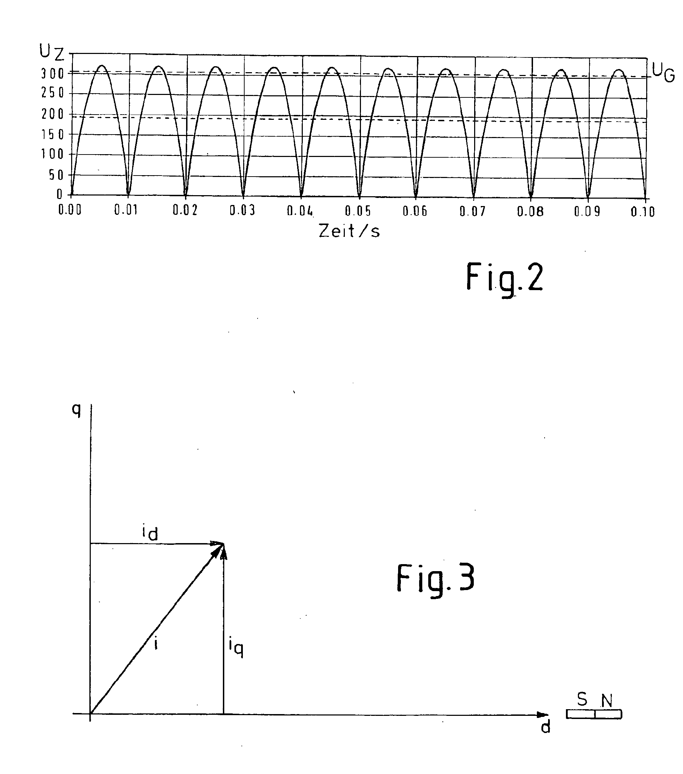

Wie sich zunächst aus Fig. 1 ergibt, besteht ein erfindungsgemäßes Steuersystem zum Ansteuern eines kollektorlosen, elektronisch kommutierten Elektromotors 2 (EC-PMSM = elektronisch kommutierter permanentmagneterregter Synchronmotor) aus einem Netzgleichrichter 4, einem nachgeschalteten schlanken Zwischenkreis 6, der keine oder eine nur minimale Zwischenkreis-Reaktanz enthält, sowie einem über den Zwischenkreis 6 gespeisten und zur Kommutierung des Elektromotors 2 ansteuerbaren Wechselrichter 8. Über den vereinfacht dargestellten, aber als Vollbrücke ausgebildeten Netzgleichrichter 4 wird eine einphasige Netzwechselspannung U_{N} mit einer Netzfrequenz f_{N} zu einer stark pulsierenden Zwischenkreisspannung U_{Z} gleichgerichtet. Diese Zwischenkreisspannung U_{Z} ist in Fig. 2 veranschaulicht; sie pulsiert mit doppelter Netzfrequenz 2f_{N} jeweils zwischen Null und einem Scheitelwert. Der Spannungsverlauf entspricht dem Betrag der sinusförmigen Netzwechselspannung U_{N}.

Gemäß Fig. 1 enthält der Zwischenkreis 6 gegebenenfalls einen Zwischenkreiskondensator C_{ZK} mit geringer Kapazität. Es kann sich um einen kleinen und preisgünstigen Folienkondensator handeln. Dieser Zwischenkreiskondensator C_{ZK} reicht aber nicht zur Glättung der Zwischenkreisspannung U_{Z} aus, so dass diese jedenfalls stark pulsiert (s. Fig. 2).

Bei dem Wechselrichter 8 handelt es sich um eine Leistungsendstufe aus einer Brückenschaltung (Drehstrom-Vollbrücke) mit sechs elektronischen Schaltern, die in Fig. 1 nicht detailliert dargestellt sind.

Der in Fig. 1 stark vereinfacht als Block dargestellte Elektromotor 2 enthält drei Wicklungsstränge insbesondere in Sternschaltung, die von dem Wechselrichter 8 angesteuert werden, um in an sich bekannter Weise ein Drehfeld zu erzeugen. Hierzu arbeitet das Steuersystem mit einer üblichen feldorientierten Strom-Raumzeiger-Regelung (Vektorregelung).

Hierzu wird auf das Diagramm in Fig. 3 verwiesen. Es handelt sich um eine Darstellung im rotorfesten kartesischen Koordinatensystem. Die waagerechte Achse d kennzeichnet die Ausrichtung des permanentmagnetischen Magnetfeldes (vgl. den beispielhaft eingezeichneten Magnet mit seinen Polen S und N). Eine Achse q verläuft dazu senkrecht. Beispielhaft ist ein Strom-Raumzeiger i dargestellt, der aus zwei Stromkomponenten resultiert und zwar einem q-Strom iq, der als drehmomentbildende Komponente senkrecht zum Permanentmagnetfeld (d-Achse) geregelt wird, und einem d-Strom i_{d}, der als magnetfeldbeeinflussende Komponente in Magnetfeldrichtung geregelt wird, so dass er kein Drehmoment bildet. Bei Synchronmotoren wird üblicherweise der d-Strom auf Null geregelt, um durch den q-Strom ein maximales Drehmoment bei optimalem Wirkungsgrad zu erreichen. Der resultierende Strom-Raumzeiger i entspricht dann mit minimalem Betrag dem q-Strom iq.

Der drehmomentbildende q-Strom iq wird über einen Drehzahlregler 10 vorgegeben und geregelt. Zur Einstellung bzw. Vorgabe einer bestimmten Drehzahl n ist ein beliebiges Stellglied 12 vorhanden. Die Ansteuerung des Wechselrichters 8 erfolgt über einen PWM-Generator 14 in Abhängigkeit vom Rotor-Drehwinkel des Elektromotors 2.

Würde nun der Elektromotor 2 direkt mit der aufgrund des schlanken Zwischenkreises 6 stark pulsierenden Zwischenkreisspannung U_{Z} gemäß Fig. 2 versorgt, so könnte unterhalb einer bestimmten Grenzspannung U_{G} nur noch ein zu kleiner Motorstrom in den Motorwicklungen eingeprägt werden, welcher das geforderte Drehmoment nicht mehr konstant hält.

Erfindungsgemäß arbeitet das Steuersystem deshalb mit einer neuartigen dynamischen Feldschwächung, wobei der d-Strom i_{d} im negativen Bereich mit einem sinusförmigen Verlauf und doppelter Netzfrequenz 2f_{N} vorgegeben wird. Hierbei wird dieser als Sollwert vorgegebene d-Strom nach seiner Phasenlage relativ zur Netzwechselspannung U_{N} und nach seiner Amplitude derart geregelt, dass eine Welligkeit des q-Stroms iq minimiert wird. Die Reihenfolge dieser Regelungen ist grundsätzlich beliebig (1. Phasenlage und 2. Amplitude oder umgekehrt). Infolge des modulierten d-Stroms i_{d} weist auch der resultierende Strangstrom eine Amplituden-Phasen-Modulation auf.

Gemäß Fig. 1 weist das Steuersystem hierzu erfindungsgemäß einen Funktionsgenerator 16 zur Vorgabe eines sich dynamisch ändernden d-Stroms i_{d} mit einem sinusförmigen Verlauf und mit zweifacher Netzfrequenz als Stromkomponente zur dynamischen Feldschwächung auf. In Verbindung mit dem Funktionsgenerator 16 ist zudem ein zweidimensionaler Extremwertregler 18 vorgesehen, der so konzipiert ist, dass er den sinusförmigen d-Strom i_{d} nach seiner Phasenlage und Amplitude derart in Abhängigkeit von dem dazu überwachten q-Strom iq regelt, dass eine Welligkeit des q-Stroms minimiert wird. Hierdurch wird dann die resultierende Motor-Strangspannung dem Verlauf der pulsierenden Zwischenkreisspannung U_{Z} mit hinreichend guter Genauigkeit nachgeführt.

Durch die erfindungsgemäße dynamische Feldschwächung und die dazu innerhalb des Steuersystems ablaufenden Vorgänge, insbesondere durch die dynamische Änderung des d-Stroms, wird vorteilhafterweise der zusätzliche Effekt einer dynamischen Energiespeicherung in den vorhandenen Motor-Induktivitäten erreicht. Diese gespeicherte Energie wird in den Zwischenkreis 6 zurückgespeist, wodurch die Zwischenkreisspannung U_{z} erhöht wird. Es handelt sich folglich um einen Hochsetzsteller-Effekt. Auch dies wirkt sich günstig auf die Reduzierung der Welligkeit des q-Stroms und dadurch auch die Drehmoment-Welligkeit aus. Die Glättung des Strangstroms durch die Motorinduktivität wirkt ebenfalls wie eine Energiespeicherung, dass die Motorinduktivität für die Rückspeisung durch den d-Strom und für die Glättung des Strangstroms als Energiespeicher zu sehen ist, der vorteilhafterweise von der Drehmomentbildung unabhängig handhabbar ist.

Die erfindungsgemäße dynamische Feldschwächung wirkt besonders gut bei Motoren, welche eine große Stranginduktivität besitzen, um zum einen eine große Spannungsabsenkung der Strangspannung zu ermöglichen, zum anderen um den Strangstrom zusätzlich zu glätten (Tiefpassverhalten).

Das Verfahren funktioniert zudem bei Motoren besonders gut, deren Frequenz des Strangstroms (Strangfrequenz) kleiner ist als die Frequenz der pulsierenden Zwischenkreisspannung (wie beschrieben, kann eine gewisse Restwelligkeit verbleiben). Die daraus resultierenden höherfrequenten Stromeinbrüche können durch das Tiefpassverhalten der Wicklung gefiltert werden, was den Stromverlauf und damit das Drehmoment stabilisiert (glättet).

Das erfindungsgemäße Verfahren kann auch in Kombination mit einem im Zwischenkreis vorgesehenen Hochsetzsteller angewandt werden, der die Zwischenkreisspannung bezüglich ihrer Augenblickswerte zumindest bis zu einer kritischen Grenzspannung erhöht und dadurch glättet. Dazu können mit besonderem Vorteil Streuinduktivitäten der Motor-Wickel köpfe als Induktivität für den Hochsetzsteller-Betrieb genutzt werden. Ein entsprechendes Verfahren ist Gegenstand der älteren europäischen Patentanmeldung EP 09163651.

Variationen und Modifikationen sind möglich im Rahmen der angefügten Ansprüche.

## Patentansprüche

1. Verfahren zum Ansteuern eines bürstenlosen, elektronisch kommutierten Elektromotors (2), und zwar eines permanentmagneterregten Synchronmotors, wobei eine eine Netzfrequenz (f_{N}) aufweisende, einphasige Netzwechselspannung (U_{N}) gleichgerichtet und über einen schlanken, keine oder nur eine minimale Zwischenkreis-Reaktanz enthaltenden Zwischenkreis (6) als mit doppelter Netzfrequenz (2f_{N}) pulsierende Zwischenkreisspannung (U_{Z}) einem Wechselrichter (8) zugeführt wird, der zur Speisung und Kommutierung des Elektromotors (2) angesteuert wird, wobei die Ansteuerung durch eine feldorientierte Strom-Raumzeiger-Regelung im rotorfesten kartesischen Koordinatensystem erfolgt, wobei ein q-Strom (iq) als drehmomentbildende Komponente des Strom-Raumzeigers (i) senkrecht zum Permanentmagnetfeld geregelt wird und ein d-Strom (i_{d}) als feldbeeinflussende Komponente des Strom-Raumzeigers (i) in Richtung des Permanentmagnetfeldes regelbar ist, **gekennzeichnet durch** eine dynamische Feldschwächung, wobei der d-Strom (i_{d}) im negativen Bereich mit einem sinusförmigen Verlauf und doppelter Netzfrequenz (2f_{N}) vorgegeben wird, und wobei der d-Strom (i_{d}) nach seiner Phasenlage und seiner Amplitude derart geregelt wird, dass eine Welligkeit des q-Stroms (i_{q}) minimiert wird.

2. Verfahren nach Anspruch 1,
**dadurch gekennzeichnet, dass** der q-Strom (iq) unabhängig vom d-Strom (i_{d}) von einem Drehzahlregler (10) vorgegeben wird.

3. Verfahren nach Anspruch 1 oder 2,
**dadurch gekennzeichnet, dass** durch die dynamische Feldschwächung eine dynamische Energiespeicherung in vorhandenen Motor-Induktivitäten und dadurch eine Energie-Rückspeisung in den Zwischenkreis (6) sowie eine Strangstromglättung erfolgt

4. Verfahren nach einem der Ansprüche 1 bis 3,
**gekennzeichnet durch** eine Anwendung für einen Motor (2) mit großer Stranginduktivität, und/oder bei einem Motor (2), dessen Strangfrequenz kleiner als die Pulsfrequenz der Zwischenkreisspannung (U_{Z}) ist.

5. Verfahren nach einem der Ansprüche 1 bis 4,
**dadurch gekennzeichnet, dass** im Zwischenkreis (6) über einen Hochsetzsteller die Zwischenkreisspannung (U_{Z}) bezüglich ihrer Augenblickswerte zumindest bis zu einer Grenzspannung erhöht und dadurch geglättet wird.

6. Verfahren nach Anspruch 5,
**dadurch gekennzeichnet, dass** Streuinduktivitäten von Motor-Wickelköpfen als Induktivität für den Hochsetzsteller verwendet werden.

7. Steuersystem für einen bürstenlose, elektronisch kommutierten Elektromotor (2), und zwar einen permanentmagneterregten Synchronmotor, insbesondere unter Anwendung des Verfahrens nach einem der vorhergehenden Ansprüche, mit einem Netzgleichrichter (4), einem nachgeschalteten schlanken Zwischenkreis (6) ohne oder mit nur minimaler Zwischenkreis-Reaktanz sowie mit einem über den Zwischenkreis (6) gespeisten und zur Kommutierung des Elektromotors (2) ansteuerbaren Wechselrichter (8) mit Mitteln zur feldorientierten Strom-Raumzeiger-Regelung im rotorfesten kartesischen Koordinatensystem mit einem Drehzahlregler (10) zur Vorgabe eines q-Stroms (i_{q}) als drehmomentbildende Komponente des Strom-Raumzeigers (i), **gekennzeichnet durch** einen Funktionsgenerator (16) zur Vorgabe eines sich dynamisch ändernden d-Stroms (i_{d}) mit einem im negativen Bereich sinusförmigen Verlauf und einer zweifachen Netzfrequenz (2f_{N}) als Stromkomponente zur dynamischen Feldschwächung sowie **durch** einen Extremwertregler (18), der den sinusförmigen d-Strom (i_{d}) nach Phasenlage und Amplitude derart in Abhängigkeit von dem q-Strom (i_{q}) regelt, dass eine Welligkeit des q-Stroms (i_{q}) minimiert wird.

8. Steuersystem nach Anspruch 7,
**dadurch gekennzeichnet, dass** der Elektromotor (2) als dreisträngiger Synchronmotor und insbesondere als Außenläufermotor ausgebildet ist.

9. Steuersystem nach Anspruch 7 oder 8,
**dadurch gekennzeichnet, dass** im Zwischenkreis (6) ein Hochsetzsteller vorgesehen ist, der die Zwischenkreisspannung (U_{z}) bezüglich ihrer Augenblickswerte zumindest bis zu einer Grenzspannung erhöht und dadurch glättet.

10. Steuersystem nach Anspruch 9,
**dadurch gekennzeichnet, dass** als Induktivität für den Hochsetzsteller Streuinduktivitäten von Motor-Wickelköpfen genutzt werden.

## Claims

1. Method for controlling a brushless, electronically commutated electric motor (2), specifically a permanent magnet excited synchronous motor, wherein a single-phase mains AC voltage (U_{N}) having a mains frequency (f_{N}) is rectified and supplied to an inverter (8) via a slender intermediate circuit (6) containing no or only a minimal intermediate circuit reactance as an intermediate circuit voltage (U_{z}) pulsating at double the mains frequency (2f_{N}), the inverter being actuated for powering and commutating the electric motor (2), wherein the actuation is carried out by means of a field-oriented current space vector control in the fixed-rotor Cartesian coordinate system, wherein a q-current (iq) as a torque-forming component of the current space vector (i) is regulated perpendicularly to the permanent magnet field and a d-current (i_{d}) can be regulated as a field-influencing component of the current space vector (i) in the direction of the permanent magnetic field,
**characterized by** a dynamic field attenuation, wherein the d-current (i_{d}) in the negative range is defined with a sinusoidal profile and at double the mains frequency (2f_{N}) and wherein the d-current (i_{d}) is regulated according to its phase position and its amplitude in such manner that ripple of the q-current (i_{q}) is minimized.

2. Method according to claim 1,
**characterized in that** the q-current (i_{q}) is defined by a speed controller (10) independently of the d-current (i_{d}).

3. Method according to claim 1 or 2,
**characterized in that**, due to the dynamic field attenuation, a dynamic energy storage occurs in the existing motor inductances and a resulting energy feedback into the intermediate circuit (6) as well as a phase power smoothing.

4. Method according to one of claims 1 to 3,
**characterized by** an application for a motor (2) with a large phase inductance, and/or for a motor (2) whose phase frequency is smaller than the pulse frequency of the intermediate circuit voltage (U_{z}).

5. Method according to one of claims 1 to 4,
**characterized in that** in the intermediate circuit (6) the intermediate circuit voltage (U_{z}) is increased and thus smoothed with respect to its instantaneous values by means of a boost converter, at least up to a limiting voltage.

6. Method according to claim 5,
**characterized in that** stray inductances of motor winding heads are used as inductance for the boost converter.

7. Control system for a brushless, electronically commutated electric motor (2), specifically a permanent magnet excited synchronous motor, in particular using the method according to one of the preceding claims, having a mains rectifier (4), a downstream slender intermediate circuit (6), without or with only minimal intermediate circuit reactance, as well as having an inverter (8) that is powered via the intermediate circuit (6) and can be actuated for commutating the electric motor (2) and has means for field-oriented current space vector control in the fixed-rotor Cartesian coordinate system with a speed controller (10) to define a q-current (iq) as torque-forming component of the current space vector (i),
**characterized by** a function generator (16) to specify a dynamically changing d-current (i_{d}) with a sinusoidal profile in the negative range and double the mains frequency (2f_{N}) as current component for dynamic field attenuation as well as by an extreme value controller (18) which regulates the d-current (i_{d}) according to the phase position and amplitude as a function of the q-current (i_{q}) in such a manner that ripple of the q-current (i_{q}) is minimized.

8. Control system according to claim 7,
**characterized in that** the electric motor (2) is configured as a three-phase synchronous motor and in particular as an external rotor motor.

9. Control system according to claim 7 or 8,
**characterized in that** a boost converter is provided in the intermediate circuit (6), the boost converter increasing and thus smoothing the intermediate circuit voltage (U_{z}) with respect to its instantaneous values, at least up to a limiting voltage.

10. Control system according to claim 9,
**characterized in that** stray inductances of motor winding heads are used as inductance for the boost converter.

## Revendications

1. Procédé permettant de commander un moteur électrique (2) commuté électroniquement sans balais, à savoir un moteur synchrone excité par des aimants permanents, dans lequel une tension alternative de réseau (U_{N}) monophasique, présentant une fréquence réseau (f_{N}) est redressée et est amenée à un onduleur (8) par l'intermédiaire d'un circuit intermédiaire (6) mince ne contenant aucune ou seulement une réactance minimale de circuit intermédiaire en tant que tension de circuit intermédiaire (U_{z}) pulsée avec une double fréquence réseau (2f_{N}), lequel onduleur est commandé pour alimenter et commuter le moteur électrique (2) dans lequel un réglage du vecteur spatial de courant à orientation de champ dans le système de coordonnées cartésien fixé au rotor permet de procéder à la commande, dans lequel un courant q (iq) est réglé de manière perpendiculaire par rapport au champ magnétique permanent en tant que composante du vecteur spatial de courant (i) formant le couple de rotation et dans lequel un courant d (i_{d}) peut être réglé en direction du champ magnétique permanent en tant que composante du vecteur spatial de courant (i) influant sur le champ, **caractérisé par** un affaiblissement de champ dynamique, dans lequel le courant d (i_{d}) est prédéfini dans la plage négative avec une variation sinusoïdale et une double fréquence réseau (2f_{N}), et dans lequel le courant d (i_{d}) est réglé selon sa position de phase et son amplitude de telle manière qu'une ondulation du courant q (iq) est minimisée.

2. Procédé selon la revendication 1,
**caractérisé en ce que** le courant q (iq) est prédéfini indépendamment du courant d (i_{d}) par un régulateur de la vitesse de rotation (10).

3. Procédé selon la revendication 1 ou 2,
**caractérisé en ce que** l'affaiblissement de champ dynamique permet une accumulation d'énergie dynamique dans des inductances du moteur présentes, ce qui entraîne une récupération d'énergie dans le circuit intermédiaire (6) ainsi qu'un lissage du courant de phase.

4. Procédé selon l'une quelconque des revendications 1 à 3,
**caractérisé par** une application pour un moteur (2) présentant une inductance de branche importante, et/ou pour un moteur (2) dont la fréquence de phase est inférieure à la fréquence d'impulsion de la tension de circuit intermédiaire (U_{z}).

5. Procédé selon l'une quelconque des revendications 1 à 4,
**caractérisé en ce que** la tension de circuit intermédiaire (U_{z}) concernant ses valeurs du moment est augmentée au moins jusqu'à une tension limite dans le circuit intermédiaire (6) par un dispositif élévateur, puis est lissée.

6. Procédé selon la revendication 5,
**caractérisé en ce que** des inductances de fuite des têtes de bobines du moteur sont utilisées comme inductance pour le dispositif élévateur.

7. Système de commande pour un moteur électrique (2) commuté électroniquement sans balais, à savoir pour un moteur synchrone excité par des aimants permanents, en particulier en appliquant le procédé selon l'une quelconque des revendications précédentes, comportant un redresseur de courant de réseau (4), un circuit intermédiaire (6) mince disposé en aval sans ou avec seulement une réactance minimale de circuit intermédiaire ainsi qu'un onduleur (8) alimenté par l'intermédiaire du circuit intermédiaire (6) et pouvant être commandé pour commuter le moteur électrique (2) et doté de moyens servant au réglage du vecteur spatial de courant à orientation de champ dans le système de coordonnées cartésien fixé au rotor avec un régulateur de la vitesse de rotation (10) permettant de prédéfinir un courant q (i_{q}) en tant que composante du vecteur spatial de courant (i) formant le couple de rotation, **caractérisé par** un générateur de fonction (16) servant à prédéfinir un courant d (i_{d}) à variation dynamique avec une variation sinusoïdale dans la plage négative et une fréquence réseau double (2f_{N}) en tant que composante de courant aux fins de l'affaiblissement de champ dynamique, et **caractérisé par** un régulateur de valeurs extrêmes (18) qui régule le courant d (i_{d}) sinusoïdal selon la position de phase et l'amplitude en fonction du courant q (i_{q}) de telle manière qu'une ondulation du courant q (i_{q}) est minimisée.

8. Système de commande selon la revendication 7,
**caractérisé en ce que** le moteur électrique (2) est réalisé sous la forme d'un moteur synchrone triphasé et en particulier sous la forme d'un moteur à induit extérieur.

9. Système de commande selon la revendication 7 ou 8,
**caractérisé en ce qu'**un dispositif élévateur est prévu dans le circuit intermédiaire (6), lequel dispositif augmente la tension de circuit intermédiaire (U_{z}) concernant ses valeurs du moment au moins jusqu'à une tension limite puis la lisse.

10. Système de commande selon la revendication 9,
**caractérisé en ce que** des inductances de fuite de têtes de bobines du moteur sont utilisées comme inductance pour le dispositif élévateur.
